# EUROPEAN PATENT SPECIFICATION

(11) **EP 4 279 021 B1**
(45) Date of publication and mention of the grant of the patent: **10.06.2026**
(21) Application number: 23166226.3
(22) Date of filing: 31.03.2023
(51) Int. Cl.: A61C 8/00

(54) **PROSTHETIC KIT FOR A DENTAL IMPLANT INCLUDING A PRE-ASSEMBLED ARTICULATED ABUTMENT**
PROTHETISCHES KIT FÜR EIN DENTALIMPLANTAT EINSCHLIESSLICH EINES VORMONTIERTEN ABUTMENTS
KIT PROSTHÉTIQUE POUR UN IMPLANT DENTAIRE COMPRENANT UN PILIER ARTICULÉ PRÉ-ASSEMBLÉ

(30) Priority: 20.05.2022 IT 202200010553
(43) Date of publication of application: 22.11.2023
(73) Proprietor: Leader Medica S.r.l., 35129 Padova (IT)
(72) Inventor: POLZELLA, Fortunato, 10060 Scalenghe (TO) (IT); POLZELLA, Chiara, 10060 Scalenghe (TO) (IT)
(74) Representative: Mola, Edoardo

(56) References cited:
- EP-A1- 3 407 826
- GB-A- 2 506 634
- KR-B1- 101 966 407
- US-A1- 2015 313 690
- US-A1- 2021 137 649
- US-A1- 2022 117 703

## Description

### TECHNICAL FIELD

The present invention refers to dental prosthesis field, in particular to a prosthetic kit for a dental implant comprising an angularly adjustable abutment.

### STATE OF THE ART

Most of the commercially available dental prostheses require the installation of an implant inside the patient's mandibular or maxillary bone, on which to subsequently mount a series of components connected to each other which are covered by a dental crown. The components of dental implants are made in most cases of metallic material, e.g. titanium, while dental crowns are generally made of ceramic or similar material. Furthermore, most of today's popular dental prostheses are configured in such a way that each component of the dental implant must be assembled / disassembled individually inside the patient's mouth, resulting in long intervention times and increasing the risk of accidental injury the patient due to several insertions/extraction of the tools used to assemble/disassemble each component. Furthermore, given a size of dental implant, as the number of components to be installed increases, there corresponds a consequent reduction in the size of each of them, and an increase in the assembly/disassembly difficulty of each component, especially in areas already itself not easily accessible in the mouth, e.g. the molar areas.

It is an ever-felt need to create dental prostheses that are easy and quick to assemble/ disassemble, trying to minimize the number of components and at the same time providing a flexible and adjustable solution so as to be adapted according to the conformation of each patient .

US-A1-20150313690 discloses a prosthesis mounted on an abutment wherein the angular position of the prosthesis is defined by abutting surfaces between the abutment and the prosthesis after a nut housed in the prosthesis is tightened to press one onto the other the prosthesis and the abutment.

KR 101 966 407 B1 describes a prosthetic kit for a dental implant comprising an abutment which can be installed in a dental implant, a connection element mounted in this abutment defining a rotational joint, and a cap which is mounted on such a connection element, wherein the cap in use carries a dental crown. The cap is mounted by means of a screw on the connection element without defining any contact with the abutment surface. When the connection element is brought in a desired angular position to install a dental crown, a resin is injected to keep constrained the connection element in such an angular position, i.e. preventing the rotational joint from moving.

### SCOPES AND BRIEF SUMMARY OF THE INVETION

The scope of the present invention is to satisfy at least in part the requirements described above, wherein this object is achieved through a prosthetic kit for a dental implant comprising a preassembled hinge abutment and a cap for constraining the angular position of the articulated abutment, according to claim 1.

In particular, the hinge abutment which is supplied to the user via the kit comprises, in a preassembled configuration, a body and a connection element to which the dental crown can be connected, so that the user can complete in a single operation the assembly/disassembly of the hinge abutment inside an implant already present inside a mandibular or maxillary bone of the patient, through the use of a first tool suitably configured to engage and rigidly constrain the hinge abutment to the implant. According to the present invention, the body of the hinge abutment can be mounted at least partially inside the dental implant, and has a connection element having one end on which a dental crown is connected, and another end stably connected to the body and preferably arranged inside a housing formed inside a head portion of the body of said hinge abutment. In particular, a ball joint is provided to adjust the inclination of the connection element with respect to an axis of the body. Pre-assembly of the hinge abutment far away from the patient e.g. in a manufacturing plant, provides the adoption of ball joint assembly industrial techniques that are impossible to perform in the presence of the patient e.g. plastic deformation, welding etc. Furthermore, on the same implant applied to the bone (mandible or maxilla) of the user, it is possible to disassemble a hinge abutment and apply another one with a different geometry based on the user's needs. Furthermore, to attach the hinge abutment on the implant, a first tool is used having a shaped cavity and configured to engage axially on a suitably shaped portion of the head of the abutment to achieve a shape coupling in torque transmission with the surfaces of the cavity of the first tool. In this way, the hinge abutment can be engaged by the first tool externally to the patient's mouth and then be inserted and rigidly constrained on the implant already applied to the user's bone by means of a predefined tightening torque applied by the first tool. Once the assembly operation of the hinge abutment on the implant is completed, the connecting element is inclined until a desired position is reached for the assembly of the dental crown. Furthermore, this angular position is constrained by using a second tool which allows the first cap to be engaged and constrained, according to a predefined tightening torque, on the free end of the connection element, said first cap having a surface inner part which can be engaged on a corresponding external surface of a portion of the head of the articulated abutment. Finally, the first cap has an externally tapered profile section configured to engage according to a conometric coupling with a corresponding internally tapered profile of a second cap which carries the dental crown. In this way, the assembly / disassembly of the dental crown is particularly rapid.

### BRIEF DESCRIPTION OF THE DRAWINGS

The constructive and functional characteristics of each component supplied within the prosthetic kit of a dental implant can be better understood from the following detailed description, wherein reference is made to the attached figures which represent a preferred and non-limiting embodiment thereof, in which:
Fig. 1 shows a view of the preassembled jointed abutment on which a first cap is mounted according to a preferred embodiment of the present invention;
Fig. 2 shows a longitudinal sectional view of an implant on which the preassembled hinge abutment according to a preferred embodiment of the present invention is mounted;
Fig. 3 shows a more detailed view of the preassembled hinge abutment according to a preferred embodiment of the present invention;
Fig. 4 shows a longitudinal sectional view of the preassembled hinge abutment according to a preferred embodiment of the present invention;
Fig. 5 shows a longitudinal sectional view of the preassembled hinge abutment engaged in the cavity of a first tool for assembly/disassembly of the preassembled hinge abutment;
Fig. 6 shows a top view of the preassembled hinge abutment engaged in the cavity of the first assembly/disassembly tool of the preassembled hinge abutment;
Fig. 7 shows a sectional view of the first engagement cap on the preassembled hinge abutment according to a preferred embodiment of the present invention;
Figs. 8-9 show an exploded view of a further embodiment of the present invention;
Figs. 10-11 show a view of yet another embodiment of the present invention.

### DETAILED DESCRIPTION OF THE INVENTION

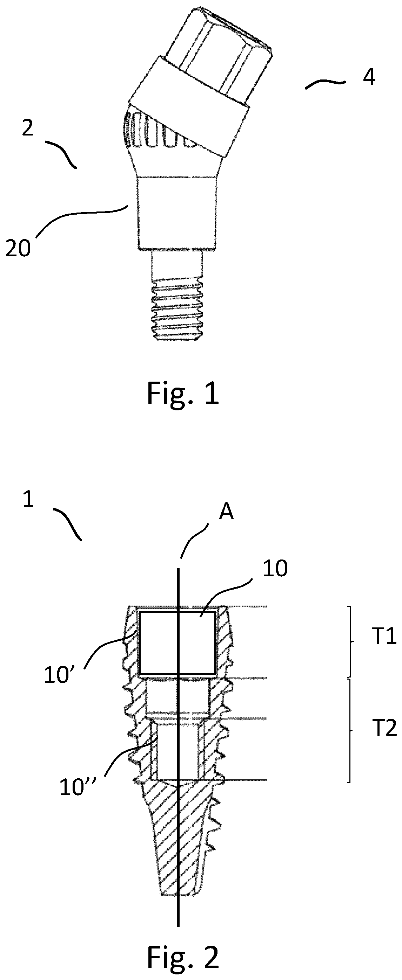

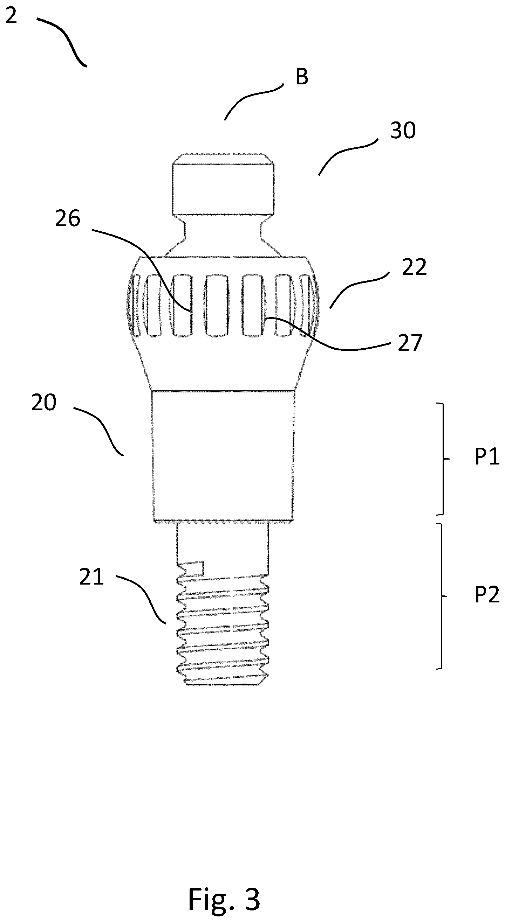

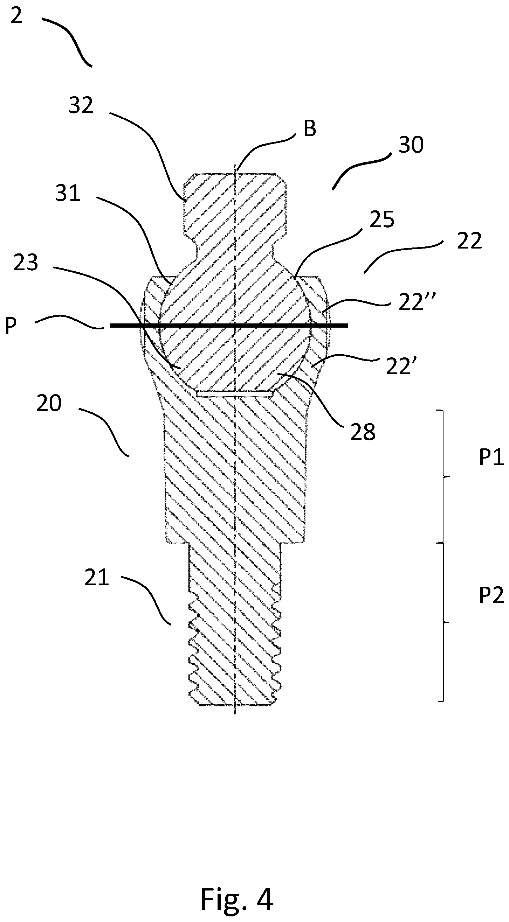

According to a preferred embodiment of the present invention, Fig. 1 shows a prosthetic kit of a dental implant K comprising a preassembled hinge abutment 2 and a first cap 4 in a configuration mounted on the hinge abutment. According to the invention, the preassembled hinge abutment 2 is configured to be assembled or disassembled on an implant 1 already present in a mandibular or maxillary bone of a patient. As shown in Fig. 2, the implant 1 is externally threaded, preferably made of titanium or material having similar characteristics of compatibility with the patient's biological tissues, and has a cavity 10 which extends axially from one end of the implant 1 along an axis A, preferably of symmetry, so as to create an access for the insertion and assembly of the preassembled hinge abutment 2. In particular, the cavity 10 is configured in such a way as to present a tapered hole 10' along a first section T1 which extends in a convergent manner from the end of the cavity 10 up to a second section T2 on which a threaded hole 10" is present at least in part. According to a preferred embodiment of the present invention shown in Fig. 3, the preassembled hinge abutment 2 comprises a connection element 30 having a first end stably connected to a body 20 and a second end to which a dental crown can be connected. In particular, the body 20 has an external profile tapered along a first section P1 which extends in a convergent manner along an axis B of the body 20, preferably of symmetry, up to a second section P2 along which a stem 21 is arranged at least in threaded part which, in an assembled configuration of the preassembled hinge abutment 2 on the implant 1, is engaged inside the cavity 10, in particular inside the hole 10". Furthermore, the tapered profiles defined on the sections T1, P1 are configured in such a way as to have tapering angles which allow, during assembly of the preassembled hinge abutment 2 on the implant 1, to position the body 20 axially inside the cavity 10 up to until an abutting condition between the respective surfaces is not reached, while the threaded stem 21 is configured in such a way as to engage at least partially inside the hole 10" and constrain the preassembled hinge abutment 2 to the implant 1 by means of the tightening it in the 10" hole. In this way, when the preassembled hinge abutment 2 is mounted on the implant 1, the body 20 is at least partially arranged inside the mandibular or maxillary bone of the patient. Furthermore, as shown in Fig. 4, the body 20 has a head 22 on the end opposite to that which engages in the implant 1, having a housing 28 in which a substantially spherical first end 31 of the connection element 30 is arranged. In particular, the head 22 comprises a base 22' having a tapered external profile which extends in a divergent manner from the body 20 parallel to the axis B and in the opposite direction with respect to the extension direction of the body 20, so that, in an assembled configuration, the base 22' remains arranged externally to the patient's mandibular bone and its inclined external surfaces guarantee bacterial seal and absence of micro-movements at the connection interface between the preassembled articulated abutment 2 and the implant 1. Furthermore, on a portion of the surface of the base 22' preferably arranged on a plane P perpendicular to the axis B is made into a recessed surface defining a seat 23, preferably semi-spherical, configured to house and engage with a corresponding portion of the surface of the first end 31.

According to a preferred embodiment of the present invention, the connection element 30 extends axially along an axis C (not shown in the figure), preferably of symmetry, from the first end 31 to a second end 32 which carries a thread. In this way, it is possible to adjust the angular position of the connection element 30 with respect to the axis B of the body 20, thus obtaining a plurality of inclination configurations of the connection element 30 and allowing the assembly of the dental crown in an angular position adjustable and adaptable according to the shape of the patient's mouth. However, to keep the first end 31 stably engaged in the seat 23, the head 22 comprises a cover 22" rigidly mounted on the base 22' and configured to block any possible axial movement of the connection element 30 which would cause the first end to disengage 31 from seat 23. In particular, the cover 22" preferably has a spherical segment shape with two bases, and is configured in such a way as to have a surface facing the side of the base 22', preferably parallel to the plane P, e.g. the base of the larger diameter spherical segment, which is in contact with a corresponding surface of the base 22', preferably in the plane P. Furthermore, the cover 22" defines a concave surface which is configured to remain in contact and engage with a corresponding surface portion of the first end 31. Furthermore, a through opening 25 is made on the cover 22", preferably concentric to the base 22', through which the connection element 30 extends from the first end 31 externally to the cover 22". In this way, the assembly of the cover 22" on the base 22' takes place through a positioning step of the connection element 30 so that it is vertically aligned with the body 20, i.e. that its axis C coincides with the axis B, followed by a step of inserting the cover 22" on the second end 32 of the connection element so that the cover 22" can slide axially along the latter up to the achievement of the contact position with the base 22'. However, to keep the cover 22" fixed on the base 22', the two components are rigidly connected to each other, e.g. by welding carried out along the perimeter in the contact area between the cover 22" and the base 22'. In this way, the rigid connection of the cover 22" to the base 22' defines the housing 28 in which the first end 31 is arranged, together defining a ball joint. Furthermore, as shown in Fig. 3, the end 31 is a solid sphere, through which it is possible to obtain a homogeneous distribution of the loads of the connection element 30 on the surface of the housing 28, thus reducing the risk of having peaks of localized loads which would cause increased wear on the ball joint. In this way, on the contrary, the wear resistance of the ball joint is improved. Furthermore, as shown in Fig. 3, the head 22 is configured in such a way as to define first notches 26 made parallel to the axis B of the abutment and arranged along the perimeter of the external surface of the head 22, preferably in an area proximal to the area of contact between the cover 22" and the base 22', while the surface portions of the head 22 between one notch and the next define first projections 27.

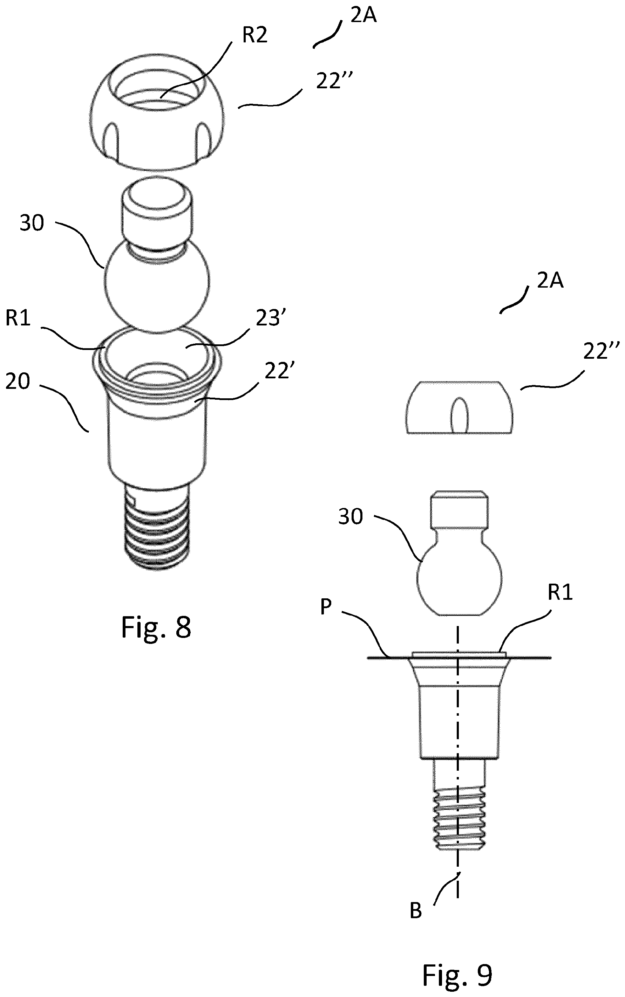

According to a further embodiment of the present invention, Figs.8 and 9 show an exploded view of a pre-assembled hinge abutment 2A, in which the references to the parts already described in the previous embodiment maintain the same numbering. In particular, this pre-assembled hinge abutment has a body 20 having, on the surface of the base 22' arranged on the plane P, a projection R1 extending in a preferably circular manner on this surface along the edge on the side of the seat 23. Moreover, this projection R1 extends radially at least partially on this surface towards the edge on the side of the external profile of the base 22'. The cover 22" on the other hand comprises a circumferential portion R2 on the inner surface, extending from the end edge of the lid in use facing the base 22', which is recessed with respect to the remaining portion of the inner surface, i.e. the surface of the cover in use in contact with the end 31 of the connection element. In particular, in this constructive configuration, the end of the cover 22" facing the base 22' has a shaped seat having a diameter such as to be able to engage axially the circumferential portion R2 of the internal surface with the projection R1, e.g. by means of a shape coupling, thus preventing the cover 22" from moving transversely to the B axis. This solution is particularly advantageous during the pre-assembly of the articulated abutment away from the patient, e.g. in the manufacturing company, since the projection allows the operator to immediately center the cover 22" on the base 22', thus simplifying the operation of positioning and assembling the same on the base, e.g. an operator does not have to hold the cover in place while e.g. a welding is made to connect the cover to the base. It should be noted that the projection R1 can be carried by the cover 22" and the shaped seat by the base 22'.

Advantageously, moreover, the base 22' and/or the cover 22" define corresponding concave contact surfaces to guide a spherical surface of the connection element 30. When the base 22' is in contact with the cover 22", these surfaces concaves are spaced perpendicular to the plane P so that an annular recess is defined between the projection R1 itself and the spherical surface. In particular, the annular recess radially distances the end portion 31 and the form coupling between the base 22' and the cover 22". This recess allows the cover 22" to be welded, reducing the impact of the temperature on the spherical surface of the end portion 31.

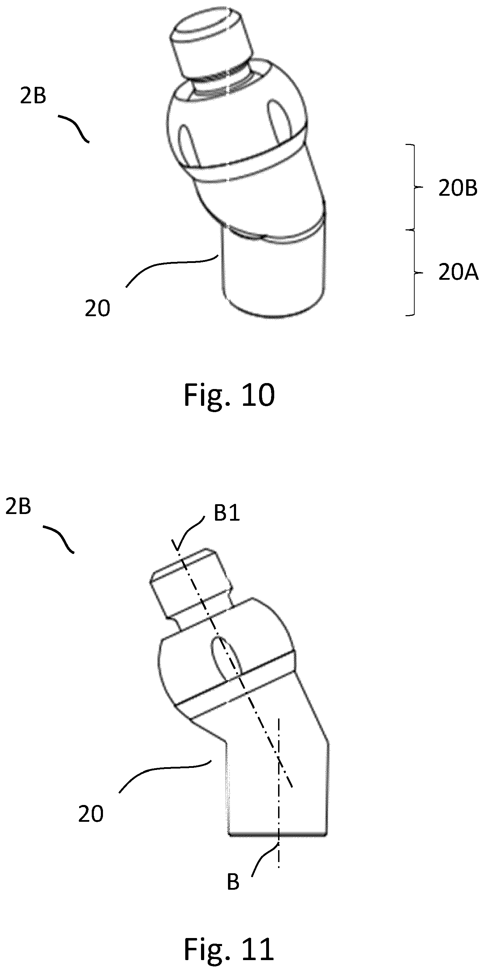

According to yet another preferred embodiment of the present invention, in Figs. 10 and 11 a pre-assembled hinge abutment 2B is shown in which, also in this case, the references to the parts already described in the previous embodiments maintain the same numbering. In particular, this pre-assembled hinge abutment comprises a body 20 having a first end portion 20A extending convergently along axis B towards an implant 1 already present inside a mandibular or maxillary bone of the patient, and a second end portion 20B extending parallel to an axis B1 transverse to axis B from the first portion 20A in the opposite direction to the implant, the axes B and B1 converging at one point so that the body 20 has a curved shape (bent). In this way, it is possible to exploit the tapering of the profile of the first portion 20A to install the pre-assembled hinge abutment on the implant, for example by engaging this first portion inside the hole 10' inside the cavity 10 of the implant 1 shown in Fig.2, e.g. via an interference fit. Therefore, when the pre-assembled hinge abutment is in place, the second portion 20B is inclined with respect to the first portion 20A, e.g. by 25 degrees with respect to the axis B. Consequently, when the connection element is positioned in such a way as to have the axis C parallel to the axis B1 of the second portion 20B, this connection element is angularly inclined with respect to the axis B. In this way, it is possible to obtain a greater overall inclination angle of the connecting element 30 with respect to the axis B, i.e. the overall angle given by the sum of the angle between the B and B1 axes and the angle between the C and B1 axes, e.g. by 50 degrees, with respect to the configurations described in the previous embodiments. As can be understood, therefore, this solution is particularly advantageous when a patient has a maxillary or mandibular conformation such that a greater inclination of the connecting element 30 is required for the assembly of the dental crown according to prescribed and/or recommended angles in the operations installation of dental prostheses, and not obtainable by using a pre-assembled jointed abutment having a body 20 extending longitudinally along the axis B.

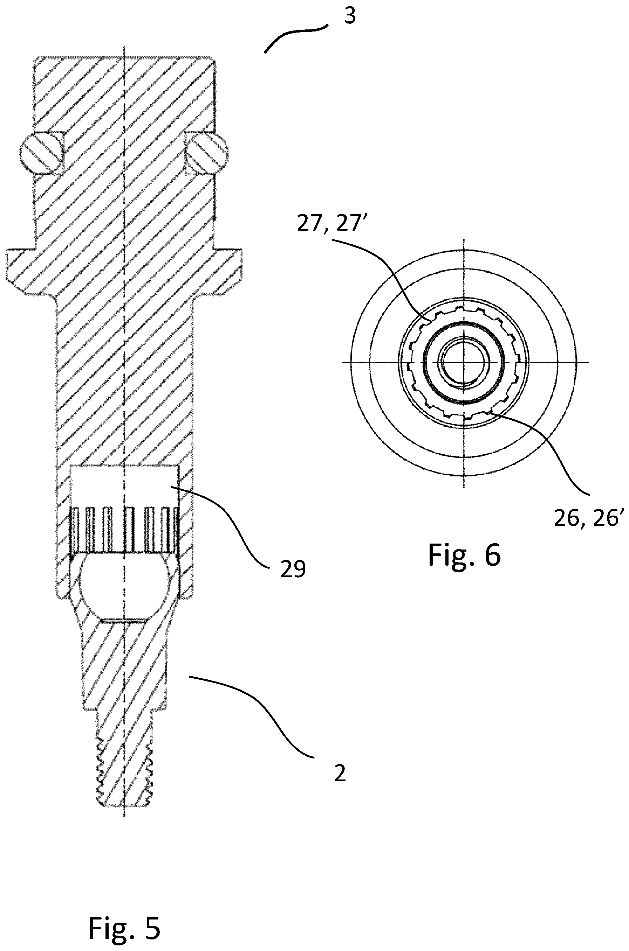

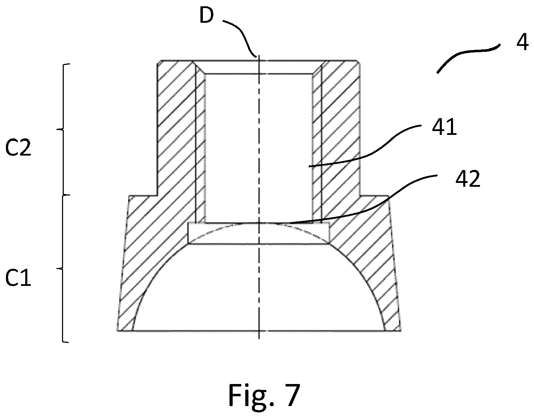

According to the invention and as shown in Figs. 5-6, the assembly or disassembly operation of the preassembled articulated abutment 2, 2A, 2B on the implant 1 takes place by engaging the first notches 26 and the first projections 27 in corresponding second notches 26' and second projections 27' arranged inside a cavity 29 formed axially on one end of a first tool 3. In particular, the second notches 26' are formed along an axis E parallel to the axis B of the body 20 and are arranged along the perimeter of the internal surface of the cavity 29 of the first tool 3, while the portions of the surface of the cavity 29 between one notch and the next define second projections 27'. In this way, the engagement of the cavity 29 of the first tool 3 on the head 22 of the preassembled hinge abutment 2 defines a shape coupling of the first notches and projections 26, 27 with the respective second notches and projections 26', 27' allowing the tool to quickly screw the entire pre-assembled hinge abutment 2, 2A, 2B onto the implant 1 and at the same time to reduce the sequence of operations to be performed and consequently the assembly times, as there is no need to assemble each component of the pre-assembled hinge abutment 2, 2A, 2B individually. In this way, the prosthetic kit of a dental implant K provides the possibility of carrying out assembly or disassembly operations on the preassembled hinge abutment 2, 2A, 2B, e.g. to replace the ball joint, while system 1 continues to operate. Furthermore, once the preassembled hinge abutment 2, 2A, 2B has been assembled on the implant 1, it is possible to use a first cap 4 to keep the connection element 30 constrained in the desired angular position. In particular, as shown in Fig. 7, the first cap 4, preferably of axisymmetric shape, comprises a first tapered section C1 which extends in a convergent manner from one end along an axis D of the first cap, preferably of symmetry, up to a second section C2 arranged between the two ends of the first cap 4, and which extends axially up to the other end of the first cap 4, defining, at least along a part of the second section C2, a profile with a hexagonal cross section. Furthermore, on the end of the first section C1 a recessed surface is made, preferably spherical, configured in such a way as to be able to engage on a corresponding portion of the convex surface of the cover 22". Furthermore, on the end of the second section C2 there is made a threaded hole 41 passing through and concentric with the axis D, configured in such a way as to make an opening 42 which allows, during assembly of the first cap 4, to engage the end 32 of the connection element 30 inside the hole 41. In this way, it is possible to constrain the first cap 4 on the cover 22" by means of a second tool 6 (not shown in the figure) which engages with the hexagonal profile arranged along the second section C2, and allows the first cap 4 to be rigidly constrained to the head 22 according to a predefined tightening torque, so as to block any rotational movements of the connection element 30. Furthermore, a second cap 5 (not shown in the figure ) having an internally tapered profile at least in part and configured to be able to be rigidly engaged on the externally tapered profile arranged on the section C1 of the first cap 4 is then mounted on the latter in such a way as to jointly form a conometric connection.

According to the present embodiment, the disassembly operation of the prosthetic kit for the dental implant K is carried out in an inverse manner with respect to the assembly operation.

## Claims

1. Prosthetic kit for a dental implant (K) comprising:
a. a preassembled hinge abutment (2; 2A, 2B), comprising a body (20) that can be rigidly constrained in a releasable way inside a cavity (10) of an implant (1) already present inside a mandibular or maxillary bone, and having first notches and first projections (26, 27) arranged peripherally on an external lateral surface of the body (20), a connection element (30) adapted to connect with a dental crown, having a first end (31) defining a rotational joint between the body (20) and the connection element (30), and extending said connection element (30) longitudinally to the opposite side with respect to the first end (31) externally to the body (20) through an opening (25) made on the body (20) up to a second end (32) defining a coupling surface to which the dental crown can be connected and longitudinally opposed to the first end (31);
b. a first cap (4), rigidly engageable in a releasable way on the second end (32) of the connection element wherein, in a mounted configuration of the preassembled hinge abutment (2) on the implant (1), the angular position of the connection element (30) is constrained by said cap (4) and wherein the first cap (4) has a threaded hole (41), wherein, in a mounted configuration of the preassembled hinge abutment (2) on the implant (1), the second end (32) is rigidly engaged, defining a threaded connection..

2. Prosthetic kit for a dental implant (K) according to claim 1, wherein the body (20) has a head (22) having a housing (28) where the end (31) of the connection element (30) is arranged.

3. Prosthetic kit for a dental implant (K) according to claim 2, wherein the end (31) of the connection element (30) has a substantially spherical surface in contact with the surface of the housing (28).

4. Prosthetic kit for a dental implant (K) according to claim 1, wherein the first cap (4) defines a recessed surface facing an external surface portion of the head (22) of the preassembled hinge abutment (2).

5. Prosthetic kit for a dental implant (K) according to claim 4, wherein the head (22) of the preassembled hinge abutment (2) has a barrel-shaped outer surface.

6. Prosthetic kit for a dental implant (K) according to claim 4, wherein the first cap (4) has an external profile at least partly tapered that can be rigidly constrained with a corresponding tapered internal profile of a second cap (5) on which the dental crown is mountable.

7. Prosthetic kit of a dental implant (K) according to any of the preceding claims, wherein the body (20) of the preassembled hinge abutment (2) has an at least partially tapered profile which extends longitudinally converging towards the implant.

8. Prosthetic kit for a dental implant (K) according to claim 7, wherein the body (20) has a threaded end facing the implant.

9. Prosthetic kit for a dental implant (K) according to any one of the preceding claims, further comprising a first tool (3) having an end on which a cavity (29) is axially formed having second notches and second projections (26', 27') arranged perimeter on the internal surface of the cavity (29), wherein said second notches and second projections (26', 27') can be engaged respectively with the first notches and the first projections (26, 27) of the head (22) of the preassembled hinge abutment (2) in an assembling or disassembling configuration of the hinge abutment (2) on the implant (1).

10. Prosthetic kit for a dental implant (K) according to any one of the preceding claims, wherein the body (20) comprises a base (22') and a cover (22") defining corresponding concave surfaces and connected to each other via a shape coupling to accommodate the first end (31) and thus guide the angular position of the connection element (30).

11. Prosthetic kit for a dental implant (K) according to claim 10, wherein the shape coupling comprises a projection (R1) housed in a corresponding seat to define a centering of the cover (22") with respect to the base (22').

12. The prosthetic kit according to one of claims 10 or 11, wherein an annular recess is defined between the shape coupling and the first end (31), the annular recess surrounding the first end (31).

13. Prosthetic kit according to claim 12, wherein the annular recess spaces said concave surfaces from each other.

14. Prosthetic kit according to any one of the preceding claims, wherein the body (20) has a first and a second end portion (20A, 20B) having corresponding axes (B, B1) converging to define a curved shape and wherein the first portion (20A) is tapered to define an interference fit with the implant.

## Patentansprüche

1. Prothesensatz für ein Zahnimplantat (K), umfassend :
a. einen vormontierten Scharnieranschlag (2; 2A, 2B), bestehend aus einem Körper (20), der in einer Kavität (10) eines bereits im Unterkiefer- oder Oberkieferknochen vorhandenen Implantats (1) starr und lösbar fixiert werden kann und der erste Kerben und erste Vorsprünge (26, 27) aufweist, die peripher auf einer äußeren Seitenfläche des Körpers (20) angeordnet sind, einem Verbindungselement (30), das zur Verbindung mit einer Zahnkrone geeignet ist und ein erstes Ende (31) aufweist, das ein Drehgelenk zwischen dem Körper (20) und dem Verbindungselement (30) bildet, wobei sich das Verbindungselement (30) in Längsrichtung auf die dem ersten Ende (31) gegenüberliegende Seite des Körpers (20) durch eine Öffnung (25) am Körper (20) bis zu einem zweiten Ende (32) erstreckt, das eine Kopplungsfläche bildet, an der die Zahnkrone befestigt werden kann und das dem ersten Ende (31) in Längsrichtung gegenüberliegt;
b. eine erste Kappe (4), die starr und lösbar am zweiten Ende (32) des Verbindungselements befestigbar ist, wobei in einer montierten Konfiguration des vormontierten Scharnieranschlags (2) auf dem Implantat (1) die Winkelposition des Verbindungselements (30) durch die Kappe (4) eingeschränkt wird, und wobei die erste Kappe (4) eine Gewindebohrung (41) aufweist, wobei in einer montierten Konfiguration des vormontierten Scharnieranschlags (2) auf dem Implantat (1) ist das zweite Ende (32) starr angekoppelt ist, so dass eine Gewindeverbindung definiert ist.

2. Prothesensatz für ein Zahnimplantat (K) nach Anspruch 1, wobei der Körper (20) einen Kopf (22) aufweist, der ein Gehäuse (28) besitzt, in dem das Ende (31) des Verbindungselements (30) angeordnet ist.

3. Prothesensatz für ein Zahnimplantat (K) nach Anspruch 2, wobei das Ende (31) des Verbindungselements (30) eine im Wesentlichen kugelförmige Oberfläche aufweist, die mit der Oberfläche des Gehäuses (28) in Kontakt steht.

4. Prothesensatz für ein Zahnimplantat (K) nach Anspruch 1, wobei die erste Kappe (4) eine vertiefte Fläche definiert, die einem äußeren Oberflächenabschnitt des Kopfes (22) des vormontierten Scharnieranschlags (2) zugewandt ist.

5. Prothesensatz für ein Zahnimplantat (K) nach Anspruch 4, wobei der Kopf (22) des vormontierten Scharnieranschlags (2) eine tonnenförmige Außenfläche aufweist.

6. Prothesensatz für ein Zahnimplantat (K) nach Anspruch 4, wobei die erste Kappe (4) ein zumindest teilweise konisches Außenprofil aufweist, das mit einem entsprechenden konischen Innenprofil einer zweiten Kappe (5), auf der die Zahnkrone montiert werden kann, starr verbunden werden kann.

7. Prothesensatz eines Zahnimplantats (K) nach einem der vorhergehenden Ansprüche, wobei der Körper (20) des vormontierten Scharnieranschlags (2) ein zumindest teilweise konisches Profil aufweist, das sich in Längsrichtung zum Implantat hin verjüngt.

8. Prothesensatz für ein Zahnimplantat (K) nach Anspruch 7, wobei der Körper (20) ein dem Implantat zugewandtes Gewindeende aufweist.

9. Prothesensatz für ein Zahnimplantat (K) nach einem der vorhergehenden Ansprüche, ferner umfassend ein erstes Werkzeug (3) mit einem Ende, an dem eine Kavität (29) axial ausgebildet ist, die zweite Kerben und zweite Vorsprünge (26', 27') aufweist, die am Umfang der Innenfläche der Kavität (29) angeordnet sind, wobei die zweiten Kerben und zweiten Vorsprünge (26', 27') jeweils mit den ersten Kerben und den ersten Vorsprüngen (26, 27) des Kopfes (22) des vormontierten Scharnieranschlags (2) einer Montage- oder Demontagekonfiguration des Scharnieranschlags (2) auf dem Implantat (1) in Eingriff gebracht werden können.

10. Prothesensatz für ein Zahnimplantat (K) nach einem der vorhergehenden Ansprüche, wobei der Körper (20) eine Basis (22') und eine Abdeckung (22") umfasst, die entsprechende konkave Flächen definieren und über eine Formkupplung miteinander verbunden sind, um das erste Ende (31) aufzunehmen und so die Winkelposition des Verbindungselements (30) zu führen.

11. Prothesensatz für ein Zahnimplantat (K) nach Anspruch 10, wobei die Formkupplung einen Vorsprung (R1) umfasst, der in einer entsprechenden Aufnahme untergebracht ist, um eine Zentrierung der Abdeckung (22") in Bezug auf die Basis (22') zu definieren.

12. Prothesenset nach einem der Ansprüche 10 oder 11, wobei zwischen der Formkupplung und dem ersten Ende (31) eine ringförmige Aussparung ausgebildet ist, wobei die ringförmige Aussparung das erste Ende (31) umschließt.

13. Prothesensatz nach Anspruch 12, wobei die ringförmige Aussparung die konkaven Oberflächen voneinander trennt.

14. Prothesensatz nach einem der vorhergehenden Ansprüche, wobei der Körper (20) einen ersten und einen zweiten Endabschnitt (20A, 20B) mit entsprechenden Achsen (B, B1) aufweist, die zusammenlaufen und eine gekrümmte Form definieren, und wobei der erste Abschnitt (20A) verjüngt ist, um eine Presspassung mit dem Implantat zu definieren.

## Revendications

1. Kit prothétique pour un implant dentaire (K) comprenant :
a. un pilier à charnière pré-assemblé (2 ; 2A, 2B), comprenant un corps (20) qui peut être contraint de manière rigide et libérable à l'intérieur d'une cavité (10) d'un implant (1) déjà présent à l'intérieur d'un os mandibulaire ou maxillaire, et présentant des premières encoches et des premières projections (26, 27) disposées en périphérie sur une surface latérale externe du corps (20), un élément de connexion (30) adapté pour se connecter à une couronne dentaire, ayant une première extrémité (31) définissant une articulation rotative entre le corps (20) et l'élément de connexion (30), et étendant ledit élément de connexion (30) longitudinalement du côté opposé par rapport à la première extrémité (31) à l'extérieur du corps (20) à travers une ouverture (25) pratiquée sur le corps (20) jusqu'à une deuxième extrémité (32) définissant une surface de couplage à laquelle la couronne dentaire peut être connectée et longitudinalement opposée à la première extrémité (31);
b. un premier capuchon (4), s'engageant de manière rigide et libérable sur la deuxième extrémité (32) de l'élément de connexion, dans lequel, dans une configuration montée du pilier de charnière pré-assemblé (2) sur l'implant (1), la position angulaire de l'élément de connexion (30) est contrainte par ledit capuchon (4), et dans lequel le premier capuchon (4) a un trou fileté (41), dans lequel, dans une configuration montée du pilier de charnière pré-assemblé (2) sur l'implant (1), la deuxième extrémité (32) est couplée de manière rigide, définissant une connexion filetée.

2. Kit prothétique pour un implant dentaire (K) selon la revendication 1, dans lequel le corps (20) comporte une tête (22) ayant un logement (28) dans lequel est disposée l'extrémité (31) de l'élément de connexion (30).

3. Kit prothétique pour implant dentaire (K) selon la revendication 2, dans lequel l'extrémité (31) de l'élément de connexion (30) a une surface sensiblement sphérique en contact avec la surface du logement (28).

4. Kit prothétique pour un implant dentaire (K) selon la revendication 1, dans lequel le premier capuchon (4) définit une surface en retrait faisant face à une partie de surface externe de la tête (22) du pilier de charnière pré-assemblé (2).

5. Kit prothétique pour un implant dentaire (K) selon la revendication 4, dans lequel la tête (22) du pilier de charnière pré-assemblé (2) a une surface externe en forme de tonneau.

6. Kit prothétique pour un implant dentaire (K) selon la revendication 4, dans lequel le premier capuchon (4) a un profil externe au moins partiellement conique qui peut être rigidement contraint par un profil interne conique correspondant d'un deuxième capuchon (5) sur lequel la couronne dentaire peut être montée.

7. Kit prothétique d'un implant dentaire (K) selon l'une quelconque des revendications précédentes, dans lequel le corps (20) du pilier de charnière pré-assemblé (2) a un profil au moins partiellement conique s'étendant longitudinalement en convergeant vers l'implant.

8. Kit prothétique pour un implant dentaire (K) selon la revendication 7, dans lequel le corps (20) a une extrémité filetée faisant face à l'implant.

9. Kit prothétique pour un implant dentaire (K) selon l'une quelconque des revendications précédentes, comprenant en outre un premier outil (3) ayant une extrémité sur laquelle une cavité (29) est formée axialement, comportant des deuxièmes encoches et des deuxièmes projections (26', 27') disposées en périphérie sur la surface interne de la cavité (29), dans lequel lesdites deuxièmes encoches et deuxièmes projections (26', 27') peuvent s'engager respectivement avec les premières encoches et les premières projections (26, 27) de la tête (22) du pilier de charnière pré-assemblé (2) dans une configuration d'assemblage ou de désassemblage du pilier de charnière (2) sur l'implant (1).

10. Kit prothétique pour un implant dentaire (K) selon l'une quelconque des revendications précédentes, dans lequel le corps (20) comprend une base (22') et un couvercle (22") définissant des surfaces concaves correspondantes et reliées entre elles par un couplage de forme pour accueillir la première extrémité (31) et ainsi guider la position angulaire de l'élément de connexion (30).

11. Kit prothétique pour un implant dentaire (K) selon la revendication 10, dans lequel le couplage de forme comprend une projection (R1) logée dans un siège correspondant pour définir un centrage du couvercle (22") par rapport à la base (22').

12. Kit prothétique selon l'une des revendications 10 ou 11, dans lequel un évidement annulaire est défini entre le couplage de forme et la première extrémité (31), l'évidement annulaire entourant la première extrémité (31).

13. Kit prothétique selon la revendications 12, dans lequel l'évidement annulaire sépare lesdites surfaces concaves l'une de l'autre.

14. Kit prothétique selon l'une quelconque des revendications précédentes, dans lequel le corps (20) comporte une première et une deuxième partie d'extrémité (20A, 20B) ayant des axes correspondants (B, B1) convergeant pour définir une forme incurvée et dans lequel la première partie (20A) est conique pour définir un ajustement serré avec l'implant.
